(19) Europäisches Patentamt
European Patent Office
Office européen des brevets

(11) **EP 4 494 876 A1**

(12) **DEMANDE DE BREVET EUROPEEN**

(43) Date de publication:
**22.01.2025 Bulletin 2025/04**

(21) Numéro de dépôt: **24188890.8**

(22) Date de dépôt: **16.07.2024**

(51) Classification Internationale des Brevets (IPC):
**B33Y 70/00** (2020.01)   **C04B 28/00** (2006.01)
**C04B 28/12** (2006.01)

(52) Classification Coopérative des Brevets (CPC):
(C-Sets disponibles)
**C04B 28/12; B33Y 70/00; C04B 28/001;**
C04B 2111/00181                    (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **19.07.2023 FR 2307752**

(71) Demandeurs:
• **Saint-Gobain Weber France
94370 Sucy en Brie (FR)**

• **Universite De Bretagne Sud
56100 Lorient (FR)**

(72) Inventeurs:
• **BEAUMONT, Julien
92400 COURBEVOIE (FR)**
• **ESPY, Guillaume
93300 AUBERVILLIERS (FR)**
• **PERROT, Arnaud
56100 LORIENT (FR)**

(74) Mandataire: **Saint-Gobain Recherche
41 Quai Lucien Lefranc
93300 Aubervilliers (FR)**

(54) **MORTIER POUR FABRICATION ADDITIVE**

(57) L'invention concerne une composition de mortier sec comprenant de la terre crue et un liant hydraulique, ledit liant hydraulique comprenant au moins 60% de ciment prompt naturel par rapport au poids de liant hydraulique.

EP 4 494 876 A1

(52) Classification Coopérative des Brevets (CPC):
(Cont.)

C-Sets
**C04B 28/001, C04B 7/02, C04B 7/34, C04B 14/06,**
**C04B 14/10, C04B 20/0048, C04B 40/0608;**
**C04B 28/12, C04B 7/02, C04B 14/06, C04B 14/10,**
**C04B 14/361, C04B 20/0048, C04B 40/0608**

**Description**

L'invention se rapporte au domaine de la construction. Elle concerne plus particulièrement la fabrication d'éléments de construction par une technique de fabrication additive.

Les techniques de fabrication additive connaissent aujourd'hui des développements prometteurs dans un grand nombre de domaines techniques. Également appelée « impression 3D », la fabrication additive est une méthode dans laquelle un robot contrôlé par ordinateur fabrique des objets tridimensionnels en déposant de manière continue un matériau couche après couche. Ces techniques permettent en particulier de fabriquer des objets présentant des formes complexes.

La fabrication additive a par exemple été employée pour fabriquer des éléments structurels tels que des murs en béton.

La fabrication additive d'éléments de construction, par exemple en béton ou mortier, permet d'intégrer les processus de conception, de planification et de construction et d'automatiser et rationaliser ce dernier. D'autres avantages de cette technologie sont notamment une réduction du coût de main d'oeuvre, une réduction des pertes et de la consommation en matériau, la suppression des coffrages et la réduction de la durée des projets et des investissements.

Selon un procédé connu, un mortier humide, obtenu en mélangeant un mortier sec et de l'eau de gâchage, est pompé et convoyé vers une tête d'impression solidaire d'un robot ou d'un portique dont le mouvement est contrôlé par ordinateur. Une couche de mortier humide est déposée sur une couche de mortier précédemment déposée, généralement en étant extrudée au travers d'une buse. La tête d'impression est continûment déplacée selon un schéma prédéterminé afin de fabriquer l'objet final.

Pour que l'élément de construction final ait une bonne résistance mécanique, il est important d'assurer une bonne adhésion entre les couches de mortier successives. Il est toutefois important que les couches de mortier conservent leur forme et puissent supporter les couches sus-jacentes. Il est également essentiel d'assurer à tout moment un bon **fonctionnement** du procédé et notamment de garantir que le mortier humide reste suffisamment fluide pendant son transport vers la buse d'impression, pour permettre de le pomper dans de bonnes conditions et éviter tout blocage. Ces différentes exigences sont à certains égards contradictoires, de sorte qu'il est difficile de trouver des compositions qui les satisfassent.

L'invention a pour but de proposer des compositions de mortier à base de terre crue qui, en répondant à l'ensemble des exigences susmentionnées, sont particulièrement bien adaptées au procédé de fabrication additive précédemment décrit.

A cet effet l'invention a pour objet une composition de mortier sec comprenant de la terre crue et un liant hydraulique, ledit liant hydraulique comprenant au moins 60% de ciment prompt naturel par rapport au poids de liant hydraulique.

Un autre objet de l'invention est un procédé de fabrication additive d'éléments de construction comprenant le mélange de la composition de mortier sec avec de l'eau pour obtenir un mortier humide, le pompage et le transport dudit mortier humide vers une tête d'impression comprenant une buse, et le dépôt successif de couches de mortier humide superposées par extrusion au travers de ladite buse.

L'invention a encore pour objet un élément de construction obtenu (ou simplement susceptible d'être obtenu) par la mise en oeuvre d'un tel procédé.

Dans le présent texte, on entend par mortier sec un mélange pulvérulent et par mortier humide la pâte obtenue par gâchage de ce mortier sec avec un liquide de gâchage, généralement de l'eau ou une composition aqueuse.

Le ciment prompt naturel ou CNP est un ciment obtenu par cuisson de calcaire argileux puis broyage. Les inventeurs ont pu mettre en évidence que son utilisation permettait d'obtenir un mortier humide dont l'évolution de la rhéologie avec le temps est optimale, permettant à la fois un pompage aisé du mortier humide et une bonne stabilité de la structure.

En particulier, les compositions selon l'invention permettent d'atteindre des vitesses d'augmentation du seuil de cisaillement particulièrement bien adaptées au procédé de fabrication additive. Le seuil de cisaillement correspond à la contrainte de cisaillement nécessaire pour initier l'écoulement du matériau. La vitesse (V) d'augmentation de ce seuil de cisaillement permet en particulier de quantifier la vitesse à laquelle le matériau se rigidifie. Une vitesse trop faible conduit à des structures qui ne sont pas stables car les couches ne sont pas aptes à supporter le poids des couches sus-jacentes. Inversement, une vitesse trop élevée entraîne une mauvaise adhésion entre les différentes couches et peut conduire à rendre difficile le transport du mortier humide, voire à des blocages. Les compositions selon l'invention permettent également d'obtenir des seuils de cisaillement initiaux (quelques minutes après le gâchage) adaptées au pompage du mortier humide.

Le liant hydraulique comprend avantageusement un mélange de CNP et de ciment Portland, ou est constitué d'un tel mélange. L'ajout de ciment Portland (OPC) permet d'ajuster le temps de prise. De préférence, le rapport massique CNP:OPC est compris entre 60 :40 et 99 :1, notamment entre 65 :35 et 80 :20.

Le liant hydraulique peut éventuellement comprendre un autre liant choisi parmi les ciments alumineux, les ciments sulfoalumineux, la chaux hydratée, les laitiers (notamment les laitiers de haut fourneau granulés broyés), les cendres volantes et les mélanges de deux ou plus de ces liants.

La quantité de liant hydraulique, notamment de mélange CNP-OPC, est de préférence comprise entre 3 et 20%, notamment entre 5 et 12%, par rapport au poids de composition de mortier sec.

L'utilisation de terre crue permet à la fois de réduire les émissions de gaz à effet de serre et la déplétion de ressources abiotiques. La terre crue est de préférence une terre d'excavation. La terre crue est avantageusement issue de l'excavation de sols situés sur le chantier ou à proximité du chantier, de sorte qu'elle ne nécessite pas ou peu de transport. On peut notamment utiliser, pour réaliser les murs d'un bâtiment, la terre excavée en vue de la réalisation des fondations dudit bâtiment. Alternativement, la terre crue peut provenir de chantiers voisins, par exemple de chantiers de travaux publics (réalisation de tunnels pour moyens de transport souterrains etc...). Le procédé permet donc de recycler ces terres excavées (réduisant ainsi les déchets générés par le chantier) et de réduire le besoin en béton ou en matériaux préfabriqués ainsi que leur transport.

La terre crue contient typiquement des sables, des argiles et du limon, en des teneurs variables selon le lieu où elle est excavée. La terre crue peut en outre avoir subi des opérations de préparation à la mise en oeuvre du procédé, notamment mais pas uniquement une opération de criblage. Lorsque des opérations de préparation sont réalisées, elles le sont de préférence sur le lieu d'excavation, ce dernier étant de préférence le lieu de construction.

De préférence, la proportion de particules de terre crue ayant une taille inférieure à 100 $\mu$m est d'au plus 40% en poids, notamment d'au plus 30% en poids, et même d'au plus 25% en poids, par exemple comprise entre 5 et 20% en poids. La proportion de particules de terre crue ayant une taille de 1 mm et plus est de préférence d'au moins 5% en poids, notamment d'au moins 8% en poids, et même d'au moins 10% en poids, par exemple comprise entre 15 et 30% en poids. La taille maximale des particules de terre crue est de préférence d'au plus 5 mm, notamment d'au plus 4 mm, voire d'au plus 3 mm et même d'au plus 2 mm. Ces proportions sont notamment obtenues par tamisage. Une proportion suffisante de particules relativement grosses s'est révélée avantageuse car elle permet de réduire le retrait et donc d'améliorer la résistance mécanique.

La teneur en terre crue est de préférence comprise entre 15 et 80%, notamment entre 20 et 50% par rapport au poids de composition de mortier sec.

La composition de mortier sec peut en outre comprendre des granulats, tels que des sables, des argiles, des fillers, des granulats légers et/ou des fibres.

L'ajout de sables et/ou d'argiles permet notamment d'ajuster la consistance du mortier humide, en fonction de la composition de la terre crue utilisée. La composition de mortier sec comprend avantageusement des argiles, par exemple de la kaolinite, lorsque la teneur en argile dans la terre crue est faible.

Les granulats légers sont de préférence choisis parmi la pouzzolane, la perlite, la vermiculite, les billes de verre expansé, les microsphères creuses de verre, les cénosphères, les silicates expansés, les argiles expansées, les billes de polystyrène expansé, le liège et leurs mélanges. Les fibres sont de préférence des fibres naturelles (végétales ou animales), notamment des fibres végétales, telles que des fibres de chanvre, de lin ou de bois.

Les granulats peuvent comprendre des granulats recyclés, par exemple issus de la démolition de bâtiments ou d'infrastructures, des sous-produits industriels, et/ou des sables issus de concassage de roche. Il peut par exemple s'agir de déchets de démolition concassés, de sables de fonderie et/ou de verre broyé. Les déchets de démolition sont par exemple des morceaux de béton, de mortier, de gypse ou encore de verre.

La composition de mortier sec peut en outre comprendre des additifs (ou adjuvants), choisis notamment parmi les agents rhéologiques (en particulier des éthers de cellulose), les agents rétenteurs d'eau, les plastifiants et superplastifiants, les agents entraîneurs d'air, les agents épaississants, les agents de protection biocides, les agents dispersants, les pigments, les accélérateurs et/ou les retardateurs et les résines polymériques. La teneur totale en additifs et adjuvants varie de préférence entre 0,001 et 5% en poids par rapport au poids total de la composition.

Le taux de gâchage, c'est-à-dire la quantité d'eau rapportée à la quantité de mortier sec est de préférence comprise entre 11 et 25%, notamment entre 14 et 19%. L'ajustement de la teneur en eau permet en particulier d'ajuster, pour un liant donné, la vitesse d'augmentation de la contrainte au seuil d'écoulement.

Le mortier humide, de consistance pâteuse, peut être pompé et transporté vers la tête d'impression d'une imprimante. Le pompage est par exemple réalisé au moyen d'une pompe à vis. Le transport se fait typiquement dans un tuyau.

La tête d'impression comprend notamment une buse à travers laquelle le mortier humide est extrudé. Lors de l'impression, la buse d'extrusion est de préférence située à moins de 100 mm de la couche de mortier sous-jacente. De préférence, la tête d'impression ne comprend pas de moyens de cisaillement, en particulier pas de moyens de cisaillement actifs, tels qu'une vis entraînée par un moteur.

L'imprimante est par exemple un robot industriel ou un portique, portant la tête d'impression, et dont le mouvement est piloté par un ordinateur. L'ordinateur comprend notamment un support d'enregistrement dans lequel est stocké un ensemble de données ou modèle 3D ainsi que des instructions, qui lorsqu'elles sont exécutées par l'ordinateur conduisent ce dernier à contrôler le déplacement (trajectoire, vitesse...) de la tête d'impression ainsi que d'autres paramètres du procédé, par exemple le taux de gâchage (c'est-à-dire le rapport entre la quantité d'eau de gâchage et la quantité de mortier sec).

La vitesse d'impression est typiquement de 30 à 1000 mm/s, notamment de 50 à 300 mm/s. L'épaisseur (ou hauteur, puisqu'il s'agit ici de la dimension dans la direction verticale) des couches de mortier est de préférence comprise entre 5 et 40 mm, notamment entre 10 et 20 mm. La largeur des couches de mortier est de préférence comprise entre 10 et 300 mm, notamment entre 20 et 100 mm.

L'élément de construction sera le plus souvent un mur ou un élément de mur, en particulier pour un mur de façade ou de refend.

Les éléments de construction peuvent être des éléments préfabriqués, destinés à être assemblés sur le chantier de construction, par exemple au moyen d'un mortier, afin de former les murs extérieurs ou intérieurs (par exemple les murs de refend) d'un bâtiment. Les éléments peuvent aussi être fabriqués directement sur le chantier de construction et former le mur complet du bâtiment.

Les dimensions latérales de l'élément de construction sont de préférence comprises entre 1 et 4 m, notamment entre 1 et 3 m. L'épaisseur est de préférence d'au plus 70 cm, notamment comprise entre 20 et 50 cm.

Exemples

Les exemples non-limitatifs qui suivent permettent d'illustrer l'invention.

Des compositions de mortier sec ont été obtenues en mélangeant du sable, des argiles (kaolinite), de la terre crue, du ciment prompt (CNP), du ciment Portland (OPC) de type CEM I, ainsi que des additifs (superplastifiants et éthers de cellulose). La terre crue comprenait (en poids) 40% de particules ayant une taille de $100\,\mu m$ et moins et 5% de particules ayant une taille de 1 mm et plus. Un mortier humide a ensuite été obtenu en mélangeant ces compositions avec de l'eau. Le tableau 1 ci-après indique pour chaque composition les teneurs en constituant en pourcents par rapport au poids de composition de mortier sec, ainsi que le taux de gâchage. Le tableau 1 indique également le seuil de cisaillement initial ($\tau_{0i}$) ainsi que la vitesse d'augmentation du seuil de cisaillement (notée V).

La vitesse d'augmentation du seuil de cisaillement a été calculée en mesurant le seuil de cisaillement à intervalles réguliers (toutes les 5 minutes) pendant 1 heure après le gâchage. Le seuil de cisaillement ($\tau_0$) a été calculé à partir de mesures réalisées à l'aide d'un pénétromètre à cône, en utilisant la formule suivante, m étant la masse du cône (en kg), $\theta$ l'angle du cône, et h l'enfoncement du cône (en m) :

[Math. 1]

$$\tau_0 \ = \ \frac{m \times g \times \cos^2\theta}{\pi h^2 \times \tan\theta}$$

[Table 1]

|  | C1 | C2 | 1 | 2 | 3 |
|---|---|---|---|---|---|
| Sable | 35,6 | 35,9 | 35,6 | 35,6 | 35,9 |
| Argile | 15,1 | 15,2 | 15,1 | 15,1 | 15,2 |
| Terre crue | 38,2 | 38,6 | 38,2 | 38,2 | 38,6 |
| CNP | 4,45 | 4,5 | 8,9 | 6,7 | 6,7 |
| OPC | 4,45 | 4,5 | 0 | 2,2 | 2,2 |
| Additifs | 2,2 | 1,37 | 2,2 | 2,2 | 1,37 |
| Eau | 21,3 | 19,7 | 21,3 | 21,3 | 17 |
| $\tau_{0i}$ (Pa) | 1000 | 700 | 1000 | 1000 | 1500 |
| V (Pa/s) | 1,2 | 0,4 | 10,2 | 8,9 | 4,7 |

Les compositions ont également été testées quant à leur capacité à être imprimées dans de bonnes conditions.

Les compositions des exemples comparatifs C1 et C2 présentent une faible vitesse d'augmentation du seuil de cisaillement et ne sont pas imprimables, car les couches de mortier humide ne sont pas capables de supporter les couches déposées ultérieurement. En revanche, les compositions des exemples selon l'invention 1 à 3 ont permis d'obtenir des vitesses d'augmentation du seuil de cisaillement convenables, suffisamment élevées pour permettre de supporter les couches déposées ultérieurement, mais sans gêner le pompage et le transport du mortier humide. Leur capacité à être imprimées était bonne.

**Revendications**

1. Composition de mortier sec comprenant de la terre crue et un liant hydraulique, ledit liant hydraulique comprenant au moins 60% de ciment prompt naturel par rapport au poids de liant hydraulique.

2. Composition selon la revendication 1, dans laquelle le liant hydraulique comprend un mélange de ciment prompt naturel (CNP) et de ciment Portland (OPC), ou est constitué d'un tel mélange.

3. Composition selon la revendication précédente, dans laquelle le rapport massique CNP:OPC est compris entre 60 :40 et 99 :1, notamment entre 65 :35 et 80 :20.

4. Composition selon l'une des revendications précédentes, dans laquelle la quantité de liant hydraulique est comprise entre 3 et 20%, notamment entre 5 et 12%, par rapport au poids de composition de mortier sec.

5. Composition selon l'une des revendications précédentes, dans laquelle la terre crue est une terre d'excavation.

6. Composition selon l'une des revendications précédentes, dans laquelle la proportion de particules de terre ayant une taille inférieure à 100 $\mu$m est d'au plus 40% en poids, notamment d'au plus 25% en poids.

7. Composition selon l'une des revendications précédentes, dans laquelle la proportion de particules de terre crue ayant une taille de 1 mm et plus est d'au moins 5% en poids, notamment d'au moins 10% en poids.

8. Composition selon l'une des revendications précédentes, dans laquelle la teneur en terre crue est comprise entre 15 et 80%, notamment entre 20 et 50%, par rapport au poids de composition de mortier sec.

9. Composition selon l'une des revendications précédentes, comprenant en outre des granulats, notamment des sables, des argiles, des fillers, des granulats légers et/ou des fibres.

10. Composition selon l'une des revendications précédentes, comprenant en outre des additifs choisis parmi les agents rhéologiques, les agents rétenteurs d'eau, les plastifiants et superplastifiants, les agents entraîneurs d'air, les agents épaississants, les agents de protection biocides, les agents dispersants, les pigments, les accélérateurs et/ou les retardateurs et les résines polymériques.

11. Procédé de fabrication additive d'éléments de construction comprenant le mélange d'une composition de mortier sec selon l'une des revendications précédentes avec de l'eau pour obtenir un mortier humide, le pompage et le transport dudit mortier humide vers une tête d'impression comprenant une buse, et le dépôt successif de couches de mortier humide superposées par extrusion au travers de ladite buse.

12. Procédé selon la revendication précédente, dans lequel la quantité d'eau rapportée à la quantité de mortier sec est comprise entre 11 et 25%, notamment entre 14 et 19%.

13. Procédé selon l'une des revendications 11 ou 12, dans lequel la tête d'impression ne comprend pas de moyens de cisaillement.

14. Elément de construction obtenu par la mise en oeuvre d'un procédé selon l'une des revendications 11 à 13.

Europäisches
Patentamt

European
Patent Office

Office européen
des brevets

# RAPPORT DE RECHERCHE EUROPEENNE

Numéro de la demande

EP 24 18 8890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DUBOIS V. ET AL: "Performances of flax shive-based lightweight composites with rapid hardening", CONSTRUCTION AND BUILDING MATERIALS, vol. 165, 1 mars 2018 (2018-03-01), pages 17-27, XP093129882, Netherlands ISSN: 0950-0618, DOI: 10.1016/j.conbuildmat.2017.12.239 | 1,5-11, 13,14 | INV. B33Y70/00 C04B28/00 C04B28/12 |
| Y | * alinéas [02.1], [02.2], [03.2]; tableau 5 * ----- | 2-4,12 | |
| Y | WO 2020/025504 A1 (SAINT GOBAIN WEBER [FR]) 6 février 2020 (2020-02-06) | 4,12 | |
| A | * page 9, lignes 14-18 * * page 11, lignes 6-15 * ----- | 1 | |
| Y | US 2021/284575 A1 (MARTINAGE OLIVIER [FR] ET AL) 16 septembre 2021 (2021-09-16) * alinéa [0060] * ----- | 2,3 | |
| Y | WO 2020/128791 A1 (HEIDELBERGCEMENT AG [DE]) 25 juin 2020 (2020-06-25) * revendications 1-3 * ----- | 2,3 | DOMAINES TECHNIQUES RECHERCHES (IPC) B33Y C04B |
| A | PERROT A. ET AL: "3D printing of earth-based materials: Processing aspects", CONSTRUCTION AND BUILDING MATERIALS, vol. 172, 1 mai 2018 (2018-05-01), pages 670-676, XP055825948, Netherlands ISSN: 0950-0618, DOI: 10.1016/j.conbuildmat.2018.04.017 * le document en entier * ----- | 1-10 | |

Le présent rapport a été établi pour toutes les revendications

| Lieu de la recherche | Date d'achèvement de la recherche | Examinateur |
|---|---|---|
| La Haye | 4 décembre 2024 | Theodoridou, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**EP 4 494 876 A1**

## ANNEXE AU RAPPORT DE RECHERCHE EUROPEENNE
## RELATIF A LA DEMANDE DE BREVET EUROPEEN NO.

EP 24 18 8890

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-12-2024

| Document brevet cité au rapport de recherche | Date de publication | Membre(s) de la famille de brevet(s) | Date de publication |
|---|---|---|---|
| WO 2020025504 A1 | 06-02-2020 | AR 116252 A1 | 14-04-2021 |
| | | BR 112020026435 A2 | 23-03-2021 |
| | | CL 2021000229 A1 | 18-06-2021 |
| | | CN 112469681 A | 09-03-2021 |
| | | EP 3830050 A1 | 09-06-2021 |
| | | FR 3084357 A1 | 31-01-2020 |
| | | WO 2020025504 A1 | 06-02-2020 |
| US 2021284575 A1 | 16-09-2021 | BR 112021001128 A2 | 20-04-2021 |
| | | EP 3826978 A1 | 02-06-2021 |
| | | FR 3084358 A1 | 31-01-2020 |
| | | US 2021284575 A1 | 16-09-2021 |
| | | WO 2020021202 A1 | 30-01-2020 |
| WO 2020128791 A1 | 25-06-2020 | EP 3898146 A1 | 27-10-2021 |
| | | ES 2963493 T3 | 27-03-2024 |
| | | PL 3898146 T3 | 19-02-2024 |
| | | US 2022041506 A1 | 10-02-2022 |
| | | WO 2020128791 A1 | 25-06-2020 |

EPO FORM P0460

Pour tout renseignement concernant cette annexe : voir Journal Officiel de l'Office européen des brevets, No.12/82